# EUROPEAN PATENT SPECIFICATION

(11) **EP 2 726 277 B1**
(45) Date of publication and mention of the grant of the patent: **20.06.2018**
(21) Application number: 12735988.3
(22) Date of filing: 28.06.2012
(51) Int. Cl.: B32B 5/02, B32B 27/36

(54) **FLAME RETARDANT FLEXIBLE SUBSTRATES AND PROCESS OF MANUFACTURE THEREOF**
FEUERFESTE FLEXIBLE SUBSTRATE UND VERFAHREN ZU IHRER HERSTELLUNG
SUBSTRATS SOUPLES IGNIFUGES ET PROCÉDÉ DE FABRICATION ASSOCIÉ

(30) Priority: 28.06.2011 US 201161501843 P
(43) Date of publication of application: 07.05.2014
(73) Proprietor: E. I. du Pont de Nemours and Company, Wilmington, DE 19898 (US)
(72) Inventor: GABRIEL, Sabine, B-4920 Harze (BE); STACHNIK, Mieczyslaw (Michel), B-L-2984 Luxembourg (BE); BERGIERS, Francis, B-1310 La Hulpe (BE); VAN DEN BERGEN, Hugues, 1620 Drogenbos (DE)
(74) Representative: Dannenberger, Oliver Andre
(86) International application number: PCT/US2012/044617
(87) International publication number: WO 2013/003574

(56) References cited:
- EP-B1- 1 370 603

## Description

### FIELD OF THE INVENTION

The present invention relates to flexible substrates having flame retardant properties, as well as to a production process to obtain the said flexible substrates having flame retardant properties.

### BACKGROUND OF THE INVENTION

In the construction industry, different fabrics that are water-permeable, yet water-proof are in high demand for applications such as roof liners, house wraps, air and/or water intrusion barriers, floor coverings and floor underlay.

Mainly, these fabrics provide for a barrier to liquid water, which, should it enter into the structure of the building, could damage the structure. At the same time, these fabrics serve as breathable layers, which allow water vapour to permeate across the fabric to evacuate excess humidity.

Synthetic fabrics, especially flash-spun polyolefin fabrics, are known to provide the aforementioned combination of properties and are therefore used extensively in buildings, for example as roof liners.

Regional and national building standards, designed to ensure the safety of the building materials used in the construction industry, require that any fabrics used in buildings meet certain criteria, especially when they are in contact with a heat source such as for example fire, intense heat radiation or electrical arcs.

In particular, when under intense heat stress, the fabric material used in roof liners, for example, should not form burning droplets of molten material that could help spread the fire, nor should it form dense, toxic fumes or smoke that could cause health problems or other discomfort in humans.

Methods that improve the flame retardancy of synthetic fabrics and which are known in the art are methods where a halogenated flame retardant composition such as a brominated diphenyl ether or another brominated aromatic compound is applied to a fabric to coat the surface of the fabric. However, fabrics coated with halogenated flame retardants will produce corrosive and toxic fumes when on fire, something which is highly undesirable in closed buildings where toxic smoke can impede the occupant's ability to evacuate the premises.

It is therefore desirable to use non-halogenated flame retardant compositions. Non-halogenated flame retardant compositions are disclosed, for example, in Japanese patent application H05-163674. This application describes a process with the steps impregnating a nonwoven fabric with a vinylphosphonate compound in the form of a liquid solution in water or alcohol, drying the fabric, and then irradiating the fabric with electron beam. Japanese patent application H08-246346 discloses a fireproofing solvent solution containing vinyl phosphonate oligomer and trimethylolpropane tri (meth) acrylate that can be cured by electron beam (EB) curing.

However, the organic solvents present in the coating itself can change the breathability of the fabric, because the organic solvent can penetrate into the void spaces of the fabric and draw the flame retardants present in the formulations into the pores. After solvent evaporation, the flame retardants present in the formulations clog the pores of the fabric, reducing the breathability of the fabric.

Furthermore, water-soluble flame retardant additives present in the coating can negatively impact water repellence. In some cases, the hydrophilicity of these additives influence the surface tension of the textile and make the treated fabric loose its waterproof characteristics, because the pores of the fabric become more wettable and therefore draw in more water by the capillary effect.

In addition, non-halogenated flame retardant compositions, and their active ingredients are expensive, and there is a significant economic advantage in applying only the necessary and sufficient amount of flame retardant composition to the fabrics that are to be fireproofed.

Therefore, there exists a need to provide flexible substrates such as fabrics having a halogen-free coating that has improved flame retardant properties fulfilling regional fire retardancy standards. In addition, the halogen-free coating should not alter the water repellence nor the vapour permeability of the treated fabric.

### SUMMARY OF THE INVENTION

The present invention provides for a flame retardant flexible substrate comprising:
a) at least one layer of a flexible substrate, and
b) at least one layer of a curable composition, said curable composition comprising
   i) at least one phosphorus-containing flame retardant additive, wherein said flame retardant additive is a phosphorus-containing, radiation curable polyester polymer precursor, and
   ii) optionally at least one monoethylenically or polyethylenically unsaturated monomer, wherein the amount of curable composition applied to the flexible substrate is from 4 weight percent to 50 weight percent, based on the areal weight of the substrate.
The present invention further provides for the flame retardant flexible substrate as defined above, wherein it comprises the curable composition in a cured state.

The flame retardant flexible substrate has excellent properties in respect to low flammability, and is particularly suitable for use in building or construction applications.

The present invention further provides a production process for flame retardant flexible substrates, comprising the steps of:
I. providing at least one layer of a flexible substrate,
II. applying at least one layer of a curable composition onto at least one face of the at least one layer of the flexible substrate, said curable composition comprising
   i) at least one phosphorus-containing flame retardant additive, wherein said flame retardant additive is a phosphorus-containing, radiation curable polyester polymer precursor, and
   ii) optionally at least one monoethylenically or polyethylenically unsaturated monomer, wherein the amount of curable composition applied to the flexible substrate is from 4 weight percent to 50 weight percent, based on the areal weight of the substrate and
III. curing said curable composition.

### DETAILED DESCRIPTION

The features and advantages of the present disclosure will be more readily understood, by those of ordinary skill in the art, from reading the following detailed description.

It is to be appreciated that certain features of the disclosure, which are, for clarity, described above and below in the context of separate embodiments, may also be provided in combination in a single embodiment.

Conversely, various features of the disclosure that are, for brevity, described in the context of a single embodiment, may also be provided separately or in any sub-combination. In addition, references in the singular may also include the plural (for example, "a" and "an" may refer to one, or one or more) unless the context specifically states otherwise.

The term "fibre" as used herein refers to staple fibres, stretch broken fibres, fibrids and pulp as well as continuous filaments, both natural and/or synthetic.

The term "nonwoven fabric" as used herein refers to any fabric comprising a structure of individual fibres that are positioned in a random manner to form a planar material without an identifiable pattern, as opposed to a knitted or woven fabric. Non-limiting examples of nonwoven fabrics are meltblown fabrics, spunbond nonwoven webs, staplebased fabrics including carded and air-laid fabrics, spunlaced fabrics, flashspun fabrics such as the fabrics commercially available from E. I. du Pont de Nemours and Company under the trademark Tyvek®, as well as any combinations of the above.

The term "woven fabric" as used herein refers to a fabric having at least one weft and at least one warp that are positioned in an periodic manner to form a planar material with an identifiable pattern, as opposed to nonwoven fabric.

The term "roof liner" as used herein refers to a single layered or multilayered fabric that can be fixed directly or indirectly to a structural component of a roofing element or ceiling in order to form a selective barrier to liquids and gases.

The term "wall covering" and "house wraps" as used herein refers to a single layered or multilayered fabric that can be fixed directly or indirectly to a structural component of a wall element in order to form a selective barrier to liquids and gases.

The term "(meth) acrylic" as used herein refers to both acrylic and methacrylic.

The terms "fireproofing" and "flameproofing" are used interchangeably, and are used herein to refer to an object, which compared to an object that is not subjected to fireproofing or flameproofing, will exhibit improved properties when under thermal stress, such as for example lower flammability, lower smoke generation and/or reduction of burning droplets.

The term "hydrostatic head" as used herein refers to the resistance to water penetration, as measured according standard EN 20811, in centimetres.

The term "MVTR" refers to the moisture vapour transition rate as measured according to EN ISO 12572 (climate C with the wet-cup method).

The term "trace amount" refers to less than 1000 ppm.

The terms "areal density" and "areal weight" are used interchangeably, and are used herein to refer to the weight of a fabric per unit area.

Unless stated otherwise, all the molecular weight data, number-average molecular weight data Mn or weight-average molecular weight data Mw stated in the present description are molecular weights determined or to be determined by gel permeation chromatography (GPC; divinylbenzene-crosslinked polystyrene as the immobile phase, tetrahydrofuran as the liquid phase, polystyrene standards).

The flame retardant flexible substrates of the present invention, and in particular the fabrics and the nonwoven fabrics, are useful in building and construction applications such as, for example, roof liners, underlays, wall coverings, as water control layer, vapour control layer and air control layer and acoustic liners, as well as in graphic and packaging applications, banner applications, car cover applications, light reflector applications, greenhouse shading applications, solar reflection screen applications, garment applications and in personal protection applications.

The flame retardant flexible substrates comprise at least one layer of a curable composition, said curable composition comprising at least one phosphorus-containing flame retardant additive, and optionally at least one monoethylenically or polyethylenically unsaturated monomer, wherein said flame retardant additive is a phosphorus-containing radiation curable polyester polymer precursor.

The curable composition may comprise of from 20 weight percent to 100 weight percent, preferably of from 40 to 99 weight percent, more preferably of from 50 weight percent to 90 weight percent of the at least one phosphorus-containing, radiation curable polyester polymer precursor, the weight percent being based on the total weight of the curable composition. The curable composition comprising at least one phosphorus-containing flame retardant additive shall now be described in more detail.

The phosphorus-containing flame retardant additive comprised in curable composition is a phosphorus-containing, radiation curable polyester polymer precursor.

The phosphorus-containing, radiation curable polyester polymer precursor can be obtained by combining at least one unsaturated dicarboxylic and/or polycarboxylic acid, at least one polyol, at least one phosphorus-containing monomer and optionally at least one saturated dicarboxylic acid.

Unsaturated dicarboxylic acids are preferably used. Unsaturated dicarboxylic acids useful in the present invention may be chosen among unsaturated dicarboxylic acids, mono- or diesters thereof, or anhydrides thereof.

Suitable unsaturated dicarboxylic acids may be mono- or polyunsaturated dicarboxylic acids, and are preferably monounsaturated.

Suitable unsaturated dicarboxylic acids are itaconic acid, fumaric acid and maleic acid, and/or mixtures thereof.

The optional at least one saturated dicarboxylic acid may be chosen among saturated dicarboxylic acids, mono- or diesters thereof, or anhydrides thereof.

Suitable saturated dicarboxylic acids may be chosen among adipic acid, sebacic acid, azelaic acid, dodecane dicarboxylic acid, oxalic acid, and/or mixtures thereof.

The at least one polyol may be chosen among saturated polyols, preferably among saturated diols.

Saturated diols may be chosen among ethylene glycol, 1, 4-butane diol, 1, 6-hexanediol, diethylene glycol, neopentylglycol, as well as isomers and/or alkoxylated derivatives thereof (usefully oxypropylated and/or oxyethylated derivatives thereof), and/or effective combinations thereof.

The at least one phosphorus-containing monomer useful in the present invention can be chosen among monomers comprising compounds of formula (I):

R¹ R² R³ P=O (I)

where at least R¹ and R² independently represent an C₁₋₂₀ organo group, such as for example a linear or branched alkyl group, substituted with one or more hydroxyl and/or carboxyl groups;
and R³ represents a hydrogen atom or an organo group, for example, an C₁₋₂₀ organo group, optionally substituted with one or more hydroxyl and/or carboxyl groups, and preferably represents an organo group optionally substituted with one or more hydroxyl and/or carboxyl groups;
and/or effective isomers, salts, and/or mixtures thereof, and/or comprising compounds of formula (II): 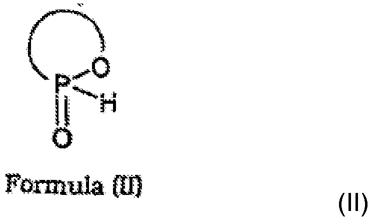 where the phosphorus atom is substituted with at least one carbon atom to form at least one P-C bond;
the P-O bond forms part of an organo ring (denoted by the arc in formula (II);
the organo ring being optionally substituted with one or more other organo groups and/or optionally fused to one or more other organo rings;
and/or effective isomers, salts, and/or mixtures thereof.

The P-O bond is preferably a resistant oxyphosphorous bond which does not hydrolyse and/or undergo transesterification under the conditions of the reaction (e.g. due to steric hindrance at the phosphorous and/or oxygen atom(s)) or where such hydrolysis and/or transesterification is readily reversible under the conditions of the reaction (e.g. where both the phosphorous and oxygen atoms of the P-O bond are ring atoms in a larger cyclic group).

Preferably the at least one phosphorus-containing monomer useful in the present invention can be chosen among monomers comprising compounds of Formulae Ia, Ib, IIa, IIb and/or IIc as described herein and/or effective isomers, salts , and/or mixtures thereof.

Preferred compounds of formula (I) comprise those of Formulae Ia and/or Ib, and/or effective isomers, salts, and/or mixtures thereof: 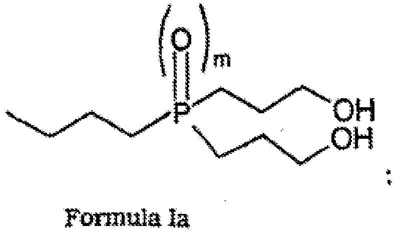 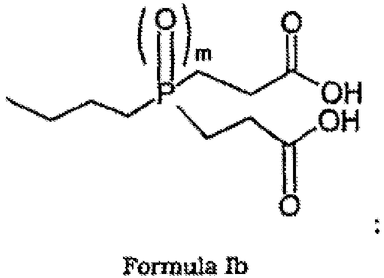 where m is 1.

Other preferred compounds according to formula I are phosphine oxides such as for example bis (hydroxymethyl) isobutylphosphine oxide, bis (hydroxypropyl) isobutylphosphine oxide and trishydroxymethylphosphine oxide.

Preferred compounds of formula (II) comprise compounds of formula IIa: 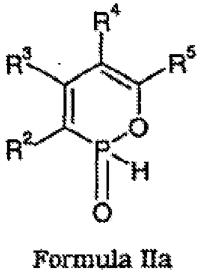 where R² to R⁵ independently represent a hydrogen atom or optionally substituted C₁₋₁₈ organo group(s), a plurality of which may together represent one or more rings optionally fused to the oxyphosphorus ring to which they are attached;
and/or effective isomers, salts, and/or mixtures thereof.

More preferred compounds of formula (II) comprise compounds of formula IIb. 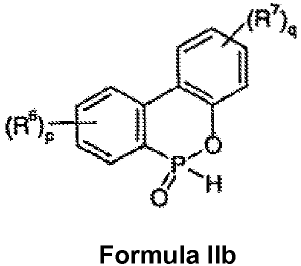 where p and q independently represent 0 or an integer of from 1 to 4; R6 and R7 independently a hydrogen atom or optionally substituted C₁₋₁₅ organo group(s) and/or optionally one or more rings (aromatic or non aromatic) fused to the benzene rings to which they are attached; and/or effective isomers, salts, and/or mixtures thereof.

Most preferably the at least one phosphorus-containing monomer according to formula (II) is 9, 10- dihydro-9-oxa-10-phosphaphenanthrene-10-oxide (DOPO), depicted in Formula IIc, and/or effective isomers, salts and/or mixtures thereof:

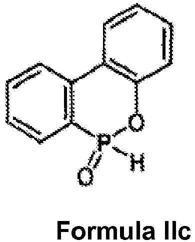

The phosphorus-containing, radiation curable polyester polymer precursor useful in the present invention contains at least one radiation curable functional group. Suitable radiation curable functional groups are groups comprising one or more olefinically unsaturated moieties. Preferably the radiation curable polyester polymer precursor contains at least one (meth) acryloyl group. Thus, the radiation curable polyester polymer precursor may be a phosphorus-containing, radiation curable polyester (meth) acrylate.

The phosphorus-containing, radiation curable polyester (meth) acrylate can be obtained by reacting the phosphorus-containing polyester as described above with at least one (meth) acrylating agent in order to introduce at least one (meth) acryloyl group. Useful (meth) acrylating agents are (meth) acrylic acid or (meth) acrylic acid esters, such as hydroxyl-functional or glycidyl-functional (meth) acrylic acid esters. Examples of (meth) acrylic acid esters are hydroxyethyl (meth) acrylate and glycidyl (meth) acrylate. An alternative process to introduce at least one radiation curable functional group is to react first the phosphorus-containing polyester as described above with a polyisocyanate to form an NCO-functional oligomer and to react the isocyanate groups of the NCO-functional oligomer with, e.g. a hydroxyl-functional (meth) acrylic acid ester, thereby forming a (meth) acryloyl-functional polyester urethane.

The phosphorus content of the phosphorus-containing, radiation curable polyester polymer precursor, in particular the radiation curable polyester (meth) acrylate, can be of from 0.5 weight percent to about 10 weight percent, more preferably of from 2 weight percent to about 7 weight percent, and most preferably of from 3 weight percent to about 6 weight percent, based on the total weight of the phosphorus-containing, radiation curable polyester polymer precursor. The phosphorus-containing, radiation curable polyester polymer precursor, in particular the radiation curable polyester (meth) acrylate can have a number average molecular weight of from 200 to about 5,000 Daltons, more preferably from 250 to about 4,000 Daltons, most preferably from 500 to about 3,000 Daltons. The phosphorus-containing, radiation curable polyester polymer precursor, in particular the radiation curable polyester (meth) acrylate can also have a number average molecular weight (Mₙ) of from 1000 to about 2,000 Daltons.

The phosphorus-containing, radiation curable polyester (meth) acrylate can comprise an average value for the number of repeat units per chain of from 2 to about 100, most preferably from 2 to about 50. Preferably the radiation curable polyester polymer precursor comprises a mixture of polymer chains with a substantially Gaussian distribution of chain lengths.

The radiation curable polyester polymer precursor, in particular the phosphorus-containing, radiation curable polyester (meth) acrylate can have a polydispersity of at least 1.1, more preferably from 1.2 to 4.0 and most preferably from 1.5 to 3.5.

The phosphorus-containing, radiation curable polyester polymer precursor useful in the present invention and methods of manufacture thereof are further disclosed, inter alia, in European patent application EP 1 370 603.

The curable composition can comprise of from 20 weight percent to 100 weight percent, preferably of from 40 weight percent to 99 weight percent, more preferably of from 50 weight percent to 90 weight percent, of the at least one phosphorus-containing, radiation curable polyester polymer precursor, the weight percent being based on the total weight of the curable composition. The curable composition may optionally further comprise at least one monoethylenically unsaturated or polyethylenically unsaturated monomer. The curable composition can comprise of from 0 weight percent to 80 weight percent, preferably of from 1 weight percent to 60 weight percent, more preferably of from 10 weight percent to 50 weight percent of the at least one monoethylenically unsaturated or polyethylenically unsaturated monomer, based on the total weight of the curable composition.

The at least one monoethylenically unsaturated or polyethylenically unsaturated monomer are also known as curable monomeric reactive diluents. Reactive diluents are reactive, polymerizable liquid monomers that act as solvents in the curable composition system and participate in the crosslinking reaction of the curable composition. They are capable of free-radical polymerization and have a molecular weight of, for example, below 500 g/mole.

The at least one monoethylenically or polyethylenically unsaturated monomer optionally comprises halogen and/or phosphorus atoms. The at least one monoethylenically unsaturated or polyethylenically unsaturated monomer may be chosen among (meth) acrylic acid and (meth) acrylic acid esters. Examples of monounsaturated (meth)acrylic acid esters are beta-carboxyethyl acrylate, butyl(meth)acrylate, methyl(meth)acrylate, isobutyl (meth)acrylate, 2- ethylhexyl(meth)acrylate, cyclohexyl (meth)acrylate, n-hexyl (meth)acrylate, isobornyl (meth)acrylate, isooctyl (meth)acrylate, n-lauryl (meth)acrylate, octyl/decyl (meth)acrylate, 2-hydroxyethyl(meth)acrylate, phenoxyethyl(meth)acrylate, nonylphenolethoxylate mono(meth)acrylate, beta-carboxylethylacrylate, 2- (-2-ethoxyethoxy) ethyl(meth)acrylate, 2-butoxyethyl (meth)acrylate, cardura- (meth)acrylate, N-vinyl pyrrolidone, phenylglycidylether(meth)acrylate and the ethoxylated and/or propoxylated derivates thereof, Examples of polyunsaturated (meth)acrylic acid esters are 1, 6-hexanediol diacrylate (HDDA), di- or tri-propylene-glycol diacrylate (DPGDA, TPGDA), ethoxylated and/or propoxylated neopentylglycoldi(meth)acrylate, pentaerythritoltri(meth)acrylate (PETA, PETMA) and the ethoxylated and/or propoxylated derivates thereof, trimethylolpropanetri(meth)acrylate (TMPTA), di-trimethylolpropanetri(meth)acrylate (diTMPTA), glyceroltri(meth)acrylate and the ethoxylated and/or propoxylated derivates thereof, bisphenol A di(meth)acrylate and the ethoxylated and/or propoxylated derivates thereof. Further examples are acrylated or methacrylated oxyethylated or/and oxypropylated derivatives.

Most preferably, the least one monoethylenically or polyethylenically unsaturated monomer, may be chosen from 1, 6-hexanediol diacrylate (HDDA), trimethylolpropanetri(meth)acrylate (TMPTA), di- or tri-propylene glycol diacrylate (DPGDA, TPGDA), and/or mixtures thereof.

The curable composition according to the invention may further comprise one or more photoinitiators to facilitate radical polymerization of unsaturated groups. Photoinitiators are compounds that can generate radicals by absorption of light, typically UV light.

Suitable photoinitiators may be, for example, photoinitiators absorbing in the wavelengths of from 190 to 600 nm. The photoinitiators may be present for example, in quantities of from 0.1 to 10.0 weight percent, preferably of from 0.1 to 5.0 weight percent, more preferably of from 0.4 to 3.0 weight percent, the weight percentages being based on the total weight of the curable composition.

The photoinitiators may be added directly to the curable composition at the time of mixing said composition, or may be added on top of the premixed curable composition after applying the layer of curable composition onto at least one face of the flexible substrate before curing.

Examples of suitable photoinitiators are benzoin and derivatives thereof, acetophenone and derivatives thereof, for example 2, 2-diacetoxyacetophenone, benzophenone and derivatives thereof, thioxanthone and derivatives thereof, anthraquinone, 1-benzoylcyclohexanol, and organophosphorus compounds, such as acylphosphine oxides. The photoinitiators may be used individually or in combination. Other typical photochemical initiators are described in "The chemistry of free radical polymerization", edited by Graeme Moad and David H. Solomon; Pergamon (1995), pages 84 to 89.

In the case where the curable composition is cured with electron beam curing, the presence of photoinitiators is not necessary and the composition may contain only trace amounts of photoinitiators.

Thermochemical initiators, which may also be used in the curable composition may be azo-compounds or peroxides that are decomposed to radicals through the application of heat, light or a redox process, and may be present for example, in quantities of from 0.1 to 10.0 weight percent, preferably of from 0.1 to 5.0 weight percent, more preferably of from 0.4 to 3.0 weight percent, the weight percentages being based on the total weight of the curable composition. The mechanisms are described in "The chemistry of free radical polymerization", edited by Graeme Moad and David H. Solomon; Pergamon (1995), pages 53-95.

Furthermore, the curable composition may comprise colorants (dyes and/or pigments), and/or additives conventionally used in coating compositions.

Examples of those additives are flow control agents, levelling agents, anti-settling agents, thickener, surfactants, adhesion promoters, stabilizing agents, antioxidants, UV-absorbers, and/or mixtures thereof. The amount of colorants and additives usually does not exceed 10% by weight.

The curable composition may also contain water and/or organic solvents. However, the curable composition is preferably free or essentially free of water and/or organic solvents i.e. the curable composition may contain only trace amounts of solvents such as water and/or volatile organic components such as glycol, ethyl acetate, acetone or n-alkanes.

The curable composition of the invention may further comprise additional flame retardant additives, such as diphenyl phosphite, dibutyl phosphite, 9,10- dihydro-9-oxa-10-phosphaphenanthrene-10-oxide (DOPO), red phosphorous, ammonium phosphates; ammonium polyphosphates, melamine phosphates (e.g. melamine pyrophosphate and/or melamine orthophosphate), aliphatic organophosphorous additives (e.g. triethylphosphate, tributylphosphate, tributoxyethyl phosphate, trioctylphosphate, triphenylphosphate, diethyl- N,N- bis(2-hydroxyethyl)aminomethyl- phosphonate) and/or dimethyl (methylphosphonate); resorcinol bis(diphenyl phosphate), bis-phenol A-bis-diphenyl phosphate), phosphate compounds available in commerece from Albemarle under the tradename Antiblaze®, cyclic phosphonate esters available in commerce from Rhodia under the tradename Amgard® CU and Amgard® 1045, aromatic phosphate esters from Albemarle (NCendX®), oligomeric phosphorous compounds; oligomeric phosphate esters from Akzo Nobel (Fyrol 51 , Fyrol 99) and from ICL Industrial Products (Fyroflex® Sol-DP), resorcinol bis(diphenyl phosphate), bis-phenol A-bis(diphenyl phosphate), trimethylolpropane methylphosphonate oligomer, pentaerythritol phosphates and/or polyphosphazene derivatives; nitrogen compounds containing hindered amine such Flamestab® NOR 116 from BASF and Hostavin® NOW from Clariant; boron compounds such as boric acid and trimethyloxyboroxine; inorganic hydroxides such as aluminium trihydroxide, magnesium hydroxide, brucite, hydromagnesite, aluminium phosphinates, mixed metal hydroxides and/or mixed metal hydroxycarbonates;
inorganic oxides such as magnesium oxide; and/or antimony trioxide; silicone, silica and/or silicate derivatives; and/or
other inorganic materials such as magnesium calcium carbonate, barium metaborate; zinc borate, zinc hydroxystannate; zinc stannate; zinc metaborate; expandable graphite; carbon nanotube and/or blends of vitreous materials that act as a flame retardant barrier; nanoparticles such as POSS™ (polyhedral oligomeric silsesquioxanes) available from Hybrid Plastics, Nanocryl® (nanosilica reinforced acrylate) available from Hanse Chemie, Aerosil® (fumed silica) available from Degussa, Nanofil® (nanoclay) available from Rockwood Clay Additives and Cloisite® (nanoclay) available from Southern Clay Products.

Although undesirable, it is possible to add halogenated flame retardant additives to the curable composition (such as tris-(2-chloroethyl) phosphite, tris-2-chloroethyl phosphate (TCEP), tris(dichloroisopropyl) phosphate (TDCP), diphenyl chlorophosphate, or chlorinated diphosphate esters, available in commerce from Albermarle as Antiblaze V66 and V88, but preferably, the curable composition is essentially free of halogenated flame retardant compositions, i.e. may contain only trace amounts of halogenated flame retardants.

The amount of curable composition necessary for fireproofing the flexible substrate is dependent on the areal weight of the substrate as well as the chemical nature of the substrate.

In general, the amount of curable composition applied to the flexible substrate may be of from 4 weight percent to 50 weight percent, and preferably from 5 weight percent to 25 weight percent, based on the areal weight of the fabric.

In the case where the fabric is a polyolefin-based nonwoven fabric, the amount of curable composition coated thereon can be from 2 weight percent to 100 weight percent, preferably of from 4 weight percent to 50 weight percent, and more preferably of from 5 weight percent to 40 weight percent, based on the areal weight of the fabric.

The flexible substrate comprising the at least one layer of the curable composition can be any self-supporting flexible substrate, such as porous or non-porous flexible substrates, preferably any self-supporting flexible porous substrate, for example, any fabric known in the fabric art, such as non-woven, woven and knitted fabrics, membranes, micro-porous films, grids, or a combination of two or more flexible substrates, such as for example SMS (spunbonded-meltblown-spunbonded) laminates.

Preferably, the flexible substrate is a nonwoven or woven fabric comprising one or more natural or synthetic (man-made) fibres or filaments

The natural fibres or filaments of the non-woven or woven fabric can be chosen among cellulose, cotton, wool, silk, sisal, linen, flax, jute, kenaf, hemp, coconut, wheat, rice, and/or mixtures thereof.

The synthetic (man-made) fibres or filaments of the non-woven or woven fabric can be chosen among polyamides, polyaramids, polyesters, polyimides, polyolefins, and/or hybrids and mixtures thereof.

In the case where the flexible substrate is a woven fabric comprising one or more synthetic (man-made) fibres or filaments, it is preferably a fabric comprising polyamide fibres or filaments, in particular aromatic polyamide fibres or filaments, such as for example para- or meta-aramid fibres or filaments.

The flexible substrate of the invention is preferably a nonwoven fabric. Suitable nonwoven fabrics can preferably be chosen among polymeric nonwoven fabrics, more preferably among polyolefinic nonwoven fabrics, polyamide nonwoven fabrics, aromatic polyamide nonwoven fabrics, polyester nonwoven fabrics, mixed polyolefinic/polyester nonwoven fabrics or any other mixed nonwoven fabric prepared from the above mentioned nonwoven fabrics.

Polyolefinic nonwoven fabrics can preferably be chosen among polyethylene nonwoven fabrics, polypropylene nonwoven fabrics or mixed polyethylene/polypropylene nonwoven fabrics.

Polyester nonwoven fabrics can preferably be chosen among poly ethylene terephthalate (PET) nonwoven fabrics, poly-hydroxylalkanoate nonwoven fabrics (PHA) such as poly-lactic acid, or mixed PET/PHA nonwoven fabrics. Most preferably, the flexible substrate of the invention is a polyethylene flash-spun fabric, as commercially available, for example, under the trade name Tyvek®, from E.I. DuPont de Nemours & Company.

The flexible substrate may be a combination of two or more flexible substrates. It may be, for example, a laminate combining two or more flexible substrates, preferably of at least two different types of woven or nonwoven fabrics. Examples of those laminates are laminates of polyethylene nonwoven and polypropylene nonwoven, available from E. I. du Pont de Nemours and Company under the trademark Tyvek®.

The flexible substrate can have a moisture vapour transmission rate (MVTR) of 100 g/m²/day and above, such as for example, of from 100 to 10000 g/m²/day. The flexible substrate preferably has a moisture vapour transmission rate (MVTR) of from 100 to 5000 g/m²/day.

For example, the polyethylene flash-spun fabric Tyvek® fabrics having areal weights of 40 g/m² and 115 g/m² have MVTR of 4134 and 830 g/m²/day respectively, when measured according to DIN EN ISO 12572 (climate C with the wet-cup method).

The flexible substrate may further comprise a metallic layer on at least one face of the flexible substrate, which can be deposited by sputtering or evaporative deposition, to increase the thermal insulation properties of the flexible substrate. Suitable metals that may be used are for example silver, gold, copper or aluminium.

It is believed that the porosity of the flexible porous substrate, for example, of the polyethylene flash-spun fabric Tyvek® enables the moisture vapour to freely diffuse through the void spaces within the fabric, but that liquid water cannot penetrate the void spaces, thus resulting in a waterproof, yet breathable material.

The present invention also relates to a production process for the flame retardant flexible substrate as described above. According to the production process a flexible substrate as defined above is provided first. Then the curable composition is applied to at least one face of the flexible substrate and cured.

The application of the curable composition may be carried out by using coating or printing methods known in the art, such as for example, spray coating, flood coating, knife coating, doctor blade coating, Meyer bar coating, dip coating, gravure coating, flexographic printing, screen printing, gravure printing and/or mixtures thereof.

Preferably, the application of the curable composition may be carried out by printing, in particular by screen printing, flexographic printing and/or gravure printing. Most preferably, the application of the curable composition is carried out by gravure printing.

As mentioned already above, the amount of curable composition necessary for fireproofing the flexible substrate can be dependent on the areal weight of the flexible substrate as well as the chemical nature of the fabric.

According to the process of the present invention the curable composition may cover the entire at least one face of the flexible substrate. The curable composition can cover of from 15 percent to 100 percent by area of the at least one face of the flexible substrate. According to a preferred embodiment the curable composition is applied to the surface of one face of the flexible substrate, while the surface of the opposite face of the flexible substrate remains free of curable composition. According to a further preferred embodiment the curable composition is applied to the flexible substrate only partially, i.e. the curable composition only partially covers the surface of at least one face of the flexible substrate. The curable composition can cover of from 15 percent to 99 percent, preferably of from 15 percent to 90 percent by area of the at least one face of the flexible substrate and most preferably between 25 percent and 50 percent of the at least one face of the flexible substrate by area.

In the case where the curable composition only partially covers the surface of the at least one face of the flexible substrate, the curable composition may be applied in the form of a regular or irregular pattern.

It is desirable to keep the opposite face of the flexible substrate essentially free of curable composition, in the case where the curing composition only partially covers the surface of the at least one face of the flexible substrate. This allows to maintain the high initial values of MVTR of the flexible substrate, while at the same time flameproofing the flexible substrate.

The flame retardant flexible substrate according to the present invention comprises at least one layer of a curable composition present in the form of a regular or irregular pattern. The regular or irregular pattern comprises a plurality of individual elements wherein the distance between adjacent elements is not in excess of 25 mm, for example of from 0.1 to 25 mm, preferably of from 0.1 mm to 20 mm, more preferably of from 0.1 to 15 mm, most preferably of from 0.5 to 8 mm.

Irregular patterns can be chosen from patterns comprising a plurality of individual elements, such as wood grain pattern, meandering patterns, labyrinthic patterns, blot patterns, other complex shapes, and/or groups thereof, and the distance between adjacent elements or groups of elements is irregular (i.e. is anisotropic), or regular(i.e. is isotropic), and is not in excess of 25 mm, for example, of from 0.1 to 25 mm, preferably of from 0.1 mm to 20 mm, more preferably of from 0.1 to 15 mm, most preferably of from 0.5 to 8 mm.

Regular patterns can be chosen from patterns comprising a plurality of individual elements such as curved or straight lines, dots, circles, squares, lozenges, polygons, other complex shapes, and/or groups thereof, and the distance between adjacent elements or groups of elements is irregular (i.e. is anisotropic), or regular(i.e. is isotropic), and is not in excess of 25 mm, for example, of from 0.1 to 25 mm, preferably of from 0.1 mm to 20 mm, more preferably of from 0.1 to 15 mm, most preferably of from 0.5 to 8 mm.

The term "distance between adjacent elements" refers to the shortest distance between two points located on the outlines of two adjacent individual elements of the same pattern.

Stated alternatively, for any element of a pattern according to the present invention, a circle having its centre on the edge of the pattern element and having a radius of the "distance between adjacent elements" will intersect with at least one other individual element of the pattern. In another embodiment, the curable composition may be present in the form of a regular or irregular pattern having a regular or irregular pattern negatively superposed on it.

By negatively superposed, it is meant that for a first pattern which is superposed with a second pattern, where the two patterns intersect or where only the second pattern is present, no curable composition is present on the flame retardant flexible substrate.

To apply the curable composition to the flexible substrate, for example, by roller coating, the curable composition should have an adequate viscosity of, for example, less than 30,000 mPas at 25°C. Preferably, the curable composition may have a viscosity of 10 mPas to 20000 mPas. More preferably, the composition may have a viscosity of 200 to 15000 mPas.

It is believed that at these viscosities, the curable composition remains at the extreme surface of the flexible substrate, in particular when the flexible substrate is a fabric, and is thereby prevented from wicking or penetrating into the void spaces of the substrate and subsequently clogging the void spaces, thus reducing the breathability of the flexible substrate.

The curable composition may be applied, for example, in a resulting dry film thickness of 0.1 to 1000 µm, preferably of from 0.1 to 200 µm.

Curing of the curable composition may be carried out by any suitable curing method known in the art, such as thermal and/or radiation curing.

Thermal curing can be carried out at temperatures of, e.g., 60 °C to 160 °C. Curing temperatures may depend on the curing chemistry and/or on the melting point of the flexible substrate to be coated. In the case where the flexible substrate is a polyolefin-based nonwoven fabric, curing temperature should not exceed 100 °C to 130 °C, depending on the specific polyolefin.

Preferably, the curing can be carried out by radiation curing, for example, by using visible light, ultraviolet radiation and/or ionising radiation such as gamma rays, X-rays or electron beam.

More preferably, curing is carried out by radiation curing with UV radiation and/or electron beam

In the case of electron beam curing the curing may be carried out with an electron beam source delivering a radiation dose of 1 to 15 MRad, more preferably of 2 to 5 MRad.

In case of UV curing the curing may be carried out with a UV lamp having a capacity of, for example 60 to 240 W/cm.

The process according to the present invention is preferably carried out as a continuous process, in which the application of the curable composition to the flexible substrate and curing thereof takes place in-line.

The following examples are intended to illustrate the invention in greater detail. All parts and percentages are on a weight basis unless otherwise indicated.

### EXAMPLES

### Testing of coated nonwoven substrates

The following test methods were used to evaluate nonwoven substrates whether made using the phosphorus containing flame retardant additive of this invention or otherwise.

### 1. Moisture Vapour Transmission Rate (MVTR)

The MVTR was measured on a Gravitest Model 6300 according to DIN EN ISO 12572 (climate C with the wet-cup method). This test method allows determining the S_{d} value of a material. The S_{d} value is the characteristic value to define the diffusion openness of a material and to represent water vapour diffusion equivalent air layer thickness. In order to eliminate the impact of the diffusion through the air layer (air gap of 15 mm between the specimen and the water in the cup) the measurements are performed based on the multilayer principle. This multilayer principle is based on the theory that the overall vapour resistance (Sd) of an assembly is the sum of the vapour resistance of its components parts. It consists in testing the vapour resistance of different numbers of nonwoven layers used in each individual cup (Sdᵢ). The resistances (Sdᵢ) are plotted against the number of specimen layers used in each cup.

Measurement conditions: temperature 23 ± 0.5 °C, relative humidity 50 ± 3 %, rH on the dry side and 100 %, rH in the cup (deionized water), air flow above the sample: (2.5m/s), air gap between specimen and water 15 mm, Area = 50 cm², time interval between each measurement is 30 minutes.

### 2. Flame propagation

Vertical flame propagation testing was performed according to the general procedures of ISO EN 11925-2 "Ignitability/Flame Propagation" Test. A 2 cm long propane/air flame was applied at 45 degrees for 15 seconds to the bottom of a 9 cm (wide) x 25 cm (high) sample held in place vertically by a metal frame. The flame was then removed and the burning sample observed for a further 5 seconds at which point the height of the upper tip of the flame was noted and reported in centimeters. A material is deemed to pass this test with "Class E" performance if six samples are tested and the flame height at 20 seconds for every sample is less than 15 cm. To further quantify burning behaviour, the test was performed as described above on several samples of a material, applying the the flame to the coated side on half of them and to the non-coated side on the other half, and an "average flame height" was calculated as the simple arithmetic mean of all the results from samples of that material. In some cases a more severe variant of this test was used wherein the flame was applied to the base of the samples for 30 seconds and the flame height was recorded after a further 30 seconds (60 seconds total burning time) as a "Class D" result. To allow more detailed comparison between materials, the "final burn height" was measured on all the sample tested, this being the highest point to which the sample burned after allowing combustion to continue until the flame self extinguished or the flame reached the top of the metal frame, even if this combustion continued after the 20 second (Class E) or 60 second (Class D) time limit. An "average final burn height" for the material was then calculated as the simple arithmetic mean of all results for samples of that material. Another measure used for some materials was to take note during the testing of each sample of whether drops of burning polymer from the sample ignited a piece of filter paper placed directly below the sample and the proportion of samples of that material showing this behaviour was reported then.

### Preparation of the phosphorus-containing flame retardant additive

The preparation of the phosphorus-containing flame retardant additive was done as described in Example 10 of EP 1370603.

### Materials made with the phosphorus-containing flame retardant additive

### Comparative Example 1

Tyvek® 1580B (Substrate 1), a flash spun polyethylene nonwoven, commercially available from E. I. du Pont de Nemours and Company, having an areal density of 80 g/m² was tested without further treatment.

### Comparative Example 2

Tyvek® 2001B (Substrate 2), a laminate of a flash spun polyethylene nonwoven and a polypropylene nonwoven having a total areal density of 145 g/m², commercially available from E. I. du Pont de Nemours and Company, was tested without further treatment.

### Example 3

A curable coating composition was prepared, consisting of 80% of the phosphorus-containing flame retardant additive prepared according to Example 10 of EP 1370603 and 20% of 1, 6-hexanediol diacrylate (HDDA), The final phosphorus content of this curable coating composition was approximately 4% by weight. The formulation was heated to 44°C to reduce its viscosity to around 1000 cP and it was then applied to one side of Substrate 1 by gravure printing a regular pattern of dots such that the amount of the coating formulation applied was approximately 8 g/m² and the dots covered 35% of the surface area of the sheet. The coated sheet was then exposed in a nitrogen atmosphere to an electron beam generated with an acceleration voltage of 200 kV so as to provide a dose of 3.5 MRad to rapidly cure the formulation to form a solid coating.

### Example 4

The curable coating composition and method of Example 3 were used, except that the pattern printed on the sheet was an anisotropic labyrinth pattern covering 42% of the surface area of the sheet and the amount of coating applied was 9 g/m².

### Example 5

The curable coating composition and method of Example 3 were used, except that the substrate used was Substrate 2, the pattern printed on the sheet was a regular pattern of dots covering 50% of the surface area of the sheet and the amount of coating applied was 13 g/m² on the polyproplylene nonwoven side of the laminate.

### Example 6

The curable coating composition and method of Example 5 were used, except that coating was applied uniformly over the whole surface of the sheet in an amount of 13 g/m² on the polyproplylene nonwoven side of Substrate 2.

| **TABLE 1** | **Comparative Example 1** | **Example 3** | **Example 4** | **Comparative Example 2** | **Example 5** | **Example 6** |
|---|---|---|---|---|---|---|
| **Substrate areal density g/m²** | 80 | 80 | 80 | 145 | 145 | 145 |
| **FR Coating composition amount (g/m²)** | 0 | 9 | 8 | 0 | 13 | 13 |
| **Average flame height (cm)** | 16.5 | 9.5 | 7.8 | 15.5 | 6.0 | 5.5 |
| **Flame propagation test EN ISO 11925-2** | Failed (E) | Passed (E) | Passed (E) | Failed (E) | Passed (E) | Passed (E) |
| **MVTR (g/m²/24h)** | 935 | 710 | 626 | 3036 | 2883 | 2792 |

Table 1 shows the amount of curable composition in g/m² applied to the two nonwoven substrates and the average height reached by the flame and test result in the EN ISO 11925-2 flame propagation test carried out on samples of the above examples. In addition, the MVTR is shown as measured according to DIN EN ISO 12572 climate C. These data indicate that the application of about 10 weight percent of the curable composition of the invention, based on the areal weight of the substrate, improved the flame retardancy in comparison to the comparative examples lacking the curable composition. The data on MVTR also indicate that application of the curable composition of the invention in the manner described does not excessively reduce the ability of moisture vapour to pass through the nonwoven substrates.

### Comparative Example 7

A curable coating composition was prepared, consisting of 61.5% Ebecryl® 40 radiation curable polyether acrylate (available from Cytec Industries), 20% HDDA and 18.5% Amgard® CU, a phosphonate ester flame retardant available from Rhodia Inc. The final phosphorus content of this curable coating composition was approximately 4% by weight. The formulation was applied to one side of Substrate 1 by screen printing a regular pattern of dots, such that the amount of the coating formulation applied was approximately 10.5 g/m² and the dots covered 35% of the surface area of the sheet. The coated sheet was then exposed in a nitrogen atmosphere to an electron beam generated with an acceleration voltage of 150 kV so as to provide a dose of 3.0 MRad to rapidly cure the coating composition to form a solid coating on the substrate.

### Comparative Example 8

Sheet samples of the coated, flash spun polyethylene sheet of Comparative Example 7 were fully immersed in deionised water at room temperature for a period of four days with the water being subjected to continuous gentle stirring by means of a magnetic stirrer. The water was changed twice per day during this period and then the sheet samples were removed from the water and were hung in a fume hood and allowed to air-dry at room temperature for three days.

### Comparative Example 9

Tyvek® 1060B (Substrate 3), a flash spun polyethylene nonwoven, commercially available from E. I. du Pont de Nemours, having an areal density of 60 g/m² was tested without further treatment.

### Example 10

A curable coating composition was prepared, consisting of 80% of the phosphorus-containing flame retardant additive prepared according to Example 10 of EP 1370603 and 20% of dipropyleneglycol diacrylate (DPGDA). The final phosphorus content of this curable coating composition was approximately 4% by weight. The mixture was heated to 60°C and it was then applied to one side of Substrate 3 by gravure printing an anisotropic labyrinth pattern such that the amount of the coating formulation applied was approximately 5 g/m² and the pattern covered 42% of the surface area of the sheet. The coated substrate was then exposed in a nitrogen atmosphere to an electron beam generated with an acceleration voltage of 150 kV so as to provide a dose of 7.0 MRad to rapidly cure the formulation to form a solid coating on the substrate.

### Example 11

Sheet samples of the coated, flash spun polyethylene sheet of Example 10 were fully immersed in deionised water at room temperature for a period of four days with the water being subjected to continuous gentle stirring by means of a magnetic stirrer. The water was changed twice per day during this period and then the sheet samples were removed from the water and were hung in a fume hood and allowed to air-dry at room temperature for three days.

| **TABLE 2** | **Comparative Example 1** | **Comparative Example 7** | **Comparative Example 8** | **Comparative Example 9** | **Example 10** | **Example 11** |
|---|---|---|---|---|---|---|
| **Substrate areal density (g/m²)** | 80 | 80 | 80 | 60 | 60 | 60 |
| **FR Coating composition amount (g/m²)** | 0 | 10.5 | 10.5 | 0 | 5 | 5 |
| **4 days immersion in water** | - | BEFORE | AFTER | - | BEFORE | AFTER |
| **Average flame height (cm)** | 13 | 8¹ | 11.7¹ | 11.3 | 7.2¹ | 7.6¹ |
| **Number of samples with burned height > 15 cm** | 6 of 12 | 4 of 20¹ | 10 of 20¹ | 2 of 12 | 1 of 12¹ | 0 of 12¹ |
| **Burning droplets** | 7 of 12 | 1 of 20 | 6 of 20 | 12 of 12 | 0 of 12 | 0 of 12 |
| **Flame propagation test EN ISO 11925-2** | Failed (E) | Passed (E) | Passed (E) | Failed (E) | Passed (D) | Passed (D) |

| | | | | | | |
|---|---|---|---|---|---|---|
| ¹ measured in final state when burning stopped spontaneously, even if this was after the specified test period had elapsed | | | | | | |

Table 2 shows the amount of curable composition in g/m² applied to the two substrates and the average height reached by the flame and test result in the EN ISO 11925-2 flame propagation test carried out on samples of the above examples. These results demonstrate that the application of both curable compositions in sufficient quantity based on the areal weight of the textile can improve the flame retardancy in comparison to the Comparative Examples 1 and 9 which lack any curable composition. However, the curable composition of Comparative Examples 7 and 8 is sensitive to water and while both pass the EN ISO 11925-2 test with Class E, Comparative Example 8 after soaking in water for 4 days shows considerable increase in the average burn height, in the proportion of samples which burn beyond 15 cm and in the proportion of samples which produce burning drops compared to Comparative Example 7 before exposure to water. Examples 10 and 11 having a coating composition based on a phosphorus containing flame retardant additive of this invention, show very little change in behaviour in the EN ISO 11925-2 test after soaking in water for 4 days, maintaining their performance even under the more stringent Class D test conditions. The high degree of water resistance exhibited by the phosphorus containing flame retardant additive of this invention may be attributed fact that the additive becomes polymerized into the solid coating during curing so that its phosphorus containing moieties become permanently attached to the solid polymer by bonds which are not susceptible to hydrolysis under ambient conditions.

### Comparative Example 12

Tyvek® 1073D (Substrate 4), a flash spun polyethylene nonwoven, commercially available from E. I. du Pont de Nemours, having an areal density of 75 g/m² was tested without further treatment.

### Example 13

A curable coating composition was prepared, consisting of 55.2% of the phosphorus-containing flame retardant additive prepared according to Example 10 of EP 1370603, 13.8% 1,6-hexanediol diacrylate, 13.8% trimethylolpropane triacrylate, 14.2% amine synergist and 3% photoinitiator. The final phosphorus content of this curable coating composition was approximately 2.75 % by weight. To this mixture was added 1.5% by weight of a coloured dye. The coating composition was applied to one side of the substrate of Substrate 1 by screen printing a regular pattern of squares such that the amount of the coating formulation applied was approximately 7 g/m² and the squares covered 25% of the surface area of the sheet. The coated substrate was then passed under a mercury vapour UV lamp of 120 W/cm power at such a speed as to provide a UV dose of approximately 500 mJ/cm² to rapidly cure the formulation to form a solid coating.

### Example 14

A curable coating composition was prepared, consisting of 60% of the phosphorus-containing flame retardant additive prepared according to Example 10 of EP 1370603, 39% of dipropyleneglycol diacrylate and 1% of carbon black The final phosphorus content of this curable coating composition was approximately 3% by weight. The mixture was heated to 50°C and it was then applied to one side of Substrate 3 by gravure printing an anisotropic labyrinth pattern such that the amount of the coating formulation applied was approximately 4 g/m² and the pattern covered 42% of the surface area of the sheet. The coated sheet was then exposed in a nitrogen atmosphere to an electron beam generated with an acceleration voltage of 90 kV so as to provide a dose of approximately 2 MRad to rapidly cure the formulation to form a solid, black pigmented coating.

| **TABLE 3** | **Comparative Example 12** | **Example 13** | **Example 14** |
|---|---|---|---|
| **Substrate areal density g/m²** | 75 | 75 | 60 |
| **FR Coating composition amount (g/m²)** | 0 | 7 | 4 |
| **Average flame height (cm)** | 15.3 | 10.4 | 11.6 |
| **Flame propagation test EN ISO 11925-2** | Failed (E) | Passed (E) | Passed (D) |

Table 3 shows the amount of curable composition in g/m² applied to the substrates and the average height reached by the flame and test result in the EN ISO 11925-2 flame propagation test carried out on samples of the above examples. These results demonstrate that the phosphorus containing flame retardant additive of this invention can be used to formulate effective pigmented and UV-cured flame retardant coating compositions.

## Claims

1. Flame retardant flexible substrate comprising
a. at least one layer of a flexible substrate, and
b. at least one layer of a curable composition, said curable composition comprising
i. at least one phosphorus-containing flame retardant additive, wherein said flame retardant additive is a phosphorus-containing, radiation curable polyester polymer precursor, and
ii. optionally at least one monoethylenically or polyethylenically unsaturated monomer,
wherein the amount of curable composition applied to the flexible substrate is from 4 weight percent to 50 weight percent, based on the areal weight of the substrate.

2. The flame retardant flexible substrate according to claim 1, wherein it comprises the curable composition in a cured state.

3. The flame retardant flexible substrate according to claim 1 or 2, wherein the phosphorus-containing radiation curable polyester polymer precursor is obtained from compounds comprising at least one unsaturated dicarboxylic and/or polycarboxylic acid, at least one polyol, at least one phosphorus-containing monomer, and optionally at least one saturated dicarboxylic acid.

4. The flame retardant flexible substrate according to claim 3, wherein the at least one phosphorus-containing monomer is chosen among monomers comprising compounds of formula I:
R¹ R² R³ P=O (I)
where at least R¹ and R² independently represent an C₁₋₂₀ organo group, substituted with one or more hydroxyl and/or carboxyl groups;
and R³ represents a hydrogen atom or an organo group optionally substituted with one or more hydroxyl and/or carboxyl groups;
and/or effective isomers, salts, and/or mixtures thereof, and/or comprising compounds of formula II: 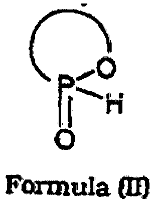 where the phosphorus atom is substituted with at least one carbon atom to form at least one P-C bond;
the P-O bond forms part of an organo ring;
the organo ring being optionally substituted with one or more other organo groups and/or optionally fused to one or more other organo rings;
and/or effective isomers, salts, and/or mixtures thereof.

5. The flame retardant flexible substrate according to any one of claims 1 to 4, wherein the phosphorus-containing, radiation curable polyester polymer precursor is a phosphorus-containing, radiation curable polyester (meth)acrylate.

6. The flame retardant flexible substrate according to any one of claims 1 to 5, wherein the curable composition comprises of from 20 weight percent to 100 weight percent of the at least one phosphorus-containing, radiation curable polyester polymer precursor, the weight percent being based on the total weight of the curable composition, preferably
wherein the curable composition comprises of from 40 weight percent to 99 weight percent of the at least one phosphorus-containing, radiation curable polyester polymer precursor, the weight percent being based on the total weight of the curable composition.

7. The flame retardant flexible substrate according to any one of claims 1 to 6, wherein the phosphorus content of the phosphorus-containing radiation curable polyester polymer precursor is of from 0.5 weight percent to about 10 weight percent, based on the total weight of the phosphorus-containing radiation curable polyester polymer precursor, preferably wherein the phosphorus content of the phosphorus-containing radiation curable polyester polymer precursor is of from 3 weight percent to about 6 weight percent, based on the total weight of the phosphorus-containing, radiation curable polyester polymer precursor.

8. The flame retardant flexible substrate according to any one of claims 1 to 7, wherein the curable composition further comprises additional flame retardant additives, and/or
wherein the flexible substrate is a porous substrate, and/or
wherein the flexible substrate is a woven or nonwoven fabric, and/or
wherein the flexible substrate is a polyolefinic nonwoven fabric, and/or
wherein the flexible substrate is a combination of two or more flexible substrate layers, and/or
wherein the flexible substrate further comprises a metallic layer on at least one face of the flexible substrate.

9. A production process for the flame retardant flexible substrate according to any one of claims 1 to 8, comprising the steps of:
I. providing at least one flexible substrate,
II. applying a layer of the curable composition onto at least one face of the flexible substrate, and
III. curing said curable composition.

10. The process according to claim 9, wherein the curable composition covers of from 15 percent to 100 percent by area of the at least one face of the flexible substrate.

11. The process according to any one of claims 9 to 10, wherein the curable composition covers the surface of one face of the flexible substrate, while the surface of the opposite face of the flexible substrate remains free of the curable composition.

12. The process according to any one of claims 9 to 11, wherein the curable composition covers of from 15 percent to 99 percent by area of the at least one face of the flexible substrate, preferably
wherein the curable composition is applied to the flexible substrate in the form of a regular or irregular pattern.

13. The process according to any one of claims 9 to 12, wherein the curable composition is cured by means of UV radiation and/or electron beam.

14. The use of the flame retardant flexible substrate according to any one of claims 1 to 8 for building and/or construction applications, for garment applications or in personal protection applications, for graphic applications, light reflector applications and/or car cover applications.

## Patentansprüche

1. Flammhemmendes, flexibles Substrat, umfassend
a. mindestens eine Schicht eines flexiblen Substrats und
b. mindestens eine Schicht einer aushärtbaren Zusammensetzung, wobei die aushärtbare Zusammensetzung Folgendes umfasst
i. mindestens ein phosphorhaltiges flammhemmendes Zusatzmittel, wobei das flammhemmende Zusatzmittel ein phosphorhaltiger, strahlungsaushärtbarer Polyesterpolymer-Vorläufer ist und
ii. wahlweise mindestens ein monoethylenisch oder polyethylenisch und ungesättigtes Monomer,
wobei die Menge ausgehärteter Zusammensetzung, die auf das flexible Substrat aufgebracht wird, 4 Gewichtsprozent bis 50 Gewichtsprozent, auf das Flächengewicht des Substrats bezogen, beträgt.

2. Flammhemmendes, flexibles Substrat nach Anspruch 1, wobei es die aushärtbare Zusammensetzung in einem ausgehärteten Zustand umfasst.

3. Flammhemmendes, flexibles Substrat nach Anspruch 1 oder 2, wobei der phosphorhaltige, strahlungsaushärtbare Polyesterpolymer-Vorläufer aus Verbindungen erhalten wird, die mindestens eine ungesättigte Dicarbonsäure und/oder Polycarbonsäure, mindestens ein Polyol, mindestens ein phosphorhaltiges Monomer und wahlweise mindestens eine gesättigte Dicarbonsäure umfassen.

4. Flammhemmendes flexibles Substrat nach Anspruch 3, wobei das mindestens eine phosphorhaltige Monomer unter Monomeren umfassend Verbindungen der Formel I:
R¹R²R³P=O (I)
wobei mindestens R¹ und R² unabhängig eine organische C₁₋₂₀-Gruppe darstellen, die mit einer oder mehreren Hydroxyl- und/oder Carboxylgruppen substituiert ist;
und R³ ein Wasserstoffatom oder eine Organogruppe darstellt, die wahlweise mit einer oder mehreren Hydroxyl- und/oder Carboxylgruppen substituiert ist;
und/oder wirksamen Isomeren, Salzen und/oder Mischungen davon ausgewählt wird und/oder umfassend Verbindungen der Formel II: 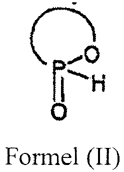 wobei das Phosphoratom mit mindestens einem Kohlenstoffatom substituiert ist, um mindestens eine P-C-Bindung zu bilden;
die P-O-Bindung Teil eines Organorings bildet;
wobei der Organoring wahlweise mit einer oder mehreren anderen Organogruppen substituiert ist und/oder wahlweise an einen oder mehrere andere Organoring fusioniert ist;
und/oder wirksame Isomere, Salze und/oder Mischungen davon.

5. Flammhemmendes, flexibles Substrat nach einem der Ansprüche 1 bis 4, wobei der phosphorhaltige, strahlungsaushärtbare Polyesterpolymer-Vorläufer ein phosphorhaltiges, strahlungsaushärtbares Polyester(meth)acrylat ist.

6. Flammhemmendes, flexibles Substrat nach einem der Ansprüche 1 bis 5, wobei die aushärtbare Zusammensetzung 20 Gewichtsprozent bis 100 Gewichtsprozent des mindestens einen phosphorhaltigen, strahlungsaushärtbaren Polyesterpolymer-Vorläufers umfasst, wobei der Gewichtsprozentsatz auf das Gesamtgewicht der aushärtbaren Zusammensetzung bezogen ist,
wobei bevorzugt die aushärtbare Zusammensetzung 40 Gewichtsprozent bis 99 Gewichtsprozent des mindestens einen phosphorhaltigen, strahlungsaushärtbaren Polyesterpolymer-Vorläufers umfasst, wobei der Gewichtsprozentsatz auf das Gesamtgewicht der aushärtbaren Zusammensetzung bezogen ist.

7. Flammhemmendes, flexibles Substrat, nach einem der Ansprüche 1 bis 6, wobei der Phosphorgehalt des phosphorhaltigen, strahlungsaushärtbaren Polyesterpolymer-Vorläufers 0,5 Gewichtsprozent bis etwa 10 Gewichtsprozent, auf das Gesamtgewicht des phosphorhaltigen, strahlungsaushärtbaren Polyesterpolymer-Vorläufers bezogen, beträgt, wobei der Phosphorgehalt des phosphorhaltigen, strahlungsaushärtbaren Polyesterpolymer-Vorläufers 3 Gewichtsprozent bis etwa 6 Gewichtsprozent, auf das Gesamtgewicht des phosphorhaltigen, strahlungsaushärtbaren Polyesterpolymer-Vorläufers bezogen, beträgt.

8. Flammhemmendes, flexibles Substrat nach einem der Ansprüche 1 bis 7, wobei die aushärtbare Zusammensetzung ferner zusätzliche flammhemmende Zusatzmittel umfasst und/oder
wobei das flexible Substrat ein poröses Substrat ist und/oder
wobei das flexible Substrat ein gewobener oder nichtgewobener Textilstoff ist und/oder
wobei das flexible Substrat ein polyolefinischer nichtgewobener Textilstoff ist und/oder
wobei das flexible Substrat eine Kombination von zwei oder mehr flexiblen Substratschichten ist und/oder
wobei das flexible Substrat ferner eine metallische Schicht auf mindestens einer Seite des flexiblen Substrats umfasst.

9. Herstellungsverfahren für das flammhemmende, flexible Substrat nach einem der Ansprüche 1 bis 8, umfassend die Schritte des:
I. Bereitstellens mindestens eines flexiblen Substrats,
II. Aufbringens einer Schicht der aushärtbaren Zusammensetzung auf mindestens eine Seite des flexiblen Substrats und
III. Aushärtens der aushärtbaren Zusammensetzung.

10. Verfahren nach Anspruch 9, wobei die aushärtbare Zusammensetzung 15 Prozent bis 100 Prozent, mit Bezug auf den Bereich der mindestens einer Seite des flexiblen Substrats bedeckt.

11. Verfahren nach einem der Ansprüche 9 bis 10, wobei die aushärtbare Zusammensetzung die Oberfläche einer Seite des flexiblen Substrats bedeckt, während die Oberfläche der entgegengesetzten Seite des flexiblen Substrats von der aushärtbaren Zusammensetzung frei bleibt.

12. Verfahren nach einem der Ansprüche 9 bis 11, wobei die Zusammensetzung 15 Prozent bis 99 Prozent, mit Bezug auf den Bereich, der mindestens einen Seite des flexiblen Substrats bedeckt,
wobei vorzugsweise die aushärtbare Zusammensetzung auf das flexible Substrat in Form eines regelmäßigen oder unregelmäßigen Musters aufgebracht ist.

13. Verfahren nach einem der Ansprüche 9 bis 12, wobei die aushärtbare Zusammensetzung durch UV-Strahlung und/oder Elektronenstrahl ausgehärtet wird.

14. Verwendung des flammhemmenden, flexiblen Substrats nach einem der Ansprüche 1 bis 8 für Bau- oder Konstruktionsanwendungen, für Kleidungsanwendungen oder bei persönlichen Schutzanwendungen, für grafische Anwendungen, Lichtreflektoranwendungen und/oder Autoschutzhüllenanwendungen

## Revendications

1. Substrat souple ignifuge comprenant
a. au moins une couche d'un substrat souple, et
b. au moins une couche d'une composition durcissable, ladite composition durcissable comprenant
i. au moins un additif ignifuge contenant du phosphore, ledit additif ignifuge étant un précurseur polymère de polyester durcissable par exposition à un rayonnement, contenant du phosphore, et
ii. optionnellement au moins un monomère monoéthyléniquement ou polyéthyléniquement insaturé,
la quantité de la composition durcissable appliquée au substrat souple étant de 4 pour cent en poids à 50 pour cent en poids, sur la base du poids surfacique du substrat.

2. Substrat souple ignifuge selon la revendication 1, comprenant la composition durcissable sous un état durci.

3. Substrat souple ignifuge selon la revendication 1 ou 2, le précurseur polymère de polyester durcissable par exposition à un rayonnement contenant du phosphore étant obtenu à partir de composés comprenant au moins un acide dicarboxylique et/ou polycarboxylique insaturé, au moins un polyol, au moins un monomère contenant du phosphore, et optionnellement au moins un acide dicarboxylique saturé.

4. Substrat souple ignifuge selon la revendication 3, ledit au moins un monomère contenant du phosphore étant choisi parmi les monomères comprenant les composés de formule I:
R¹R²R³P=O (I)
où au moins R¹ et R² représentent indépendamment un groupe organo en C₁ à C₂₀, substitué par un ou plusieurs groupes hydroxyle et/ou carboxyle;
et R³ représente un atome d'hydrogène ou un groupe organo optionnellement substitué par un ou plusieurs groupes hydroxyle et/ou carboxyle;
et/ou leurs isomères, sels, et/ou mélanges efficaces, et/ou comprenant des composés de formule II: 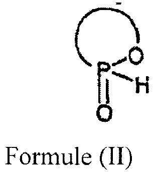 où l'atome de phosphore est substitué par au moins un atome de carbone pour former au moins une liaison P-C;
la liaison P-O forme une partie d'un cycle organo;
le cycle organo étant optionnellement substitué par un ou plusieurs autres groupes organo et/ou optionnellement condensé à un ou plusieurs autres cycles organo;
et/ou leurs isomères, sels, et/ou mélanges efficaces.

5. Substrat souple ignifuge selon l'une quelconque des revendications 1 à 4, le précurseur polymère de polyester durcissable par exposition à un rayonnement, contenant du phosphore étant un (méth)acrylate de polyester durcissable par exposition à un rayonnement, contenant du phosphore.

6. Substrat souple ignifuge selon l'une quelconque des revendications 1 à 5, la composition durcissable comprenant de 20 pour cent en poids à 100 pour cent en poids dudit au moins un précurseur polymère de polyester durcissable par exposition à un rayonnement, contenant du phosphore, le pourcentage en poids étant basé sur le poids total de la composition durcissable, préférablement la composition durcissable comprenant de 40 pour cent en poids à 99 pour cent en poids dudit précurseur polymère de polyester durcissable par exposition à un rayonnement, contenant du phosphore, le pourcentage en poids étant basé sur le poids total de la composition durcissable.

7. Substrat souple ignifuge selon l'une quelconque des revendications 1 à 6, la teneur en phosphore du précurseur polymère de polyester durcissable par exposition à un rayonnement contenant du phosphore étant de 0,5 pour cent en poids à environ 10 pour cent en poids, sur la base du poids total du précurseur polymère de polyester durcissable par exposition à un rayonnement contenant du phosphore, préférablement la teneur en phosphore du précurseur polymère de polyester durcissable par exposition à un rayonnement contenant du phosphore étant de 3 pour cent en poids à environ 6 pour cent en poids, sur la base du poids total du précurseur polymère de polyester durcissable par exposition à un rayonnement, contenant du phosphore.

8. Substrat souple ignifuge selon l'une quelconque des revendications 1 à 7, la composition durcissable comprenant en outre des additifs ignifuges additionnels, et/ou
le substrat souple étant un substrat poreux, et/ou
le substrat souple étant un textile tissé ou non-tissé, et/ou
le substrat souple étant un textile polyoléfinique non tissé, et/ou
le substrat souple étant une combinaison de deux couches de substrat souple ou plus, et/ou
le substrat souple comprenant en outre une couche métallique sur au moins une face du substrat souple.

9. Procédé de production du substrat souple ignifuge selon l'une quelconque des revendications 1 à 8, comprenant les étapes de:
I. fourniture d'au moins un substrat souple,
II. application d'une couche de la composition durcissable sur au moins une face du substrat souple, et
III. durcissement de ladite composition durcissable.

10. Procédé selon la revendication 9, la composition durcissable couvrant de 15 pour cent à 100 pour cent en surface de la au moins une face du substrat souple.

11. Procédé selon l'une quelconque des revendications 9 à 10, la composition durcissable couvrant la surface d'une face du substrat souple, tandis que la surface de la face opposée du substrat souple demeure exempte de composition durcissable.

12. Procédé selon l'une quelconque des revendications 9 à 11, la composition durcissable couvrant de 15 pour cent à 99 pour cent en surface de la au moins une face du substrat souple, préférablement
la composition durcissable étant appliquée au substrat souple sous la forme d'un motif régulier ou irrégulier.

13. Procédé selon l'une quelconque des revendications 9 à 12, la composition durcissable étant durcie à l'aide d'une exposition à un rayonnement UV et/ou d'un faisceau d'électrons.

14. Utilisation du substrat souple ignifuge selon l'une quelconque des revendications 1 à 8 dans les applications de bâtiment et/ou de construction, dans les applications vestimentaires ou dans les applications de protection individuelle, dans les applications graphiques, les applications de réflexion de lumière et/ou les applications de revêtement de voiture.
